# EUROPÄISCHE PATENTSCHRIFT

(11) **EP 1 512 576 B1**
(45) Veröffentlichungstag und Bekanntmachung des Hinweises auf die Patenterteilung: **14.04.2010**
(21) Anmeldenummer: 04019653.7
(22) Anmeldetag: 19.08.2004
(51) Int. Cl.: B60N 2/12, B60N 2/08, B60N 2/22

(54) **Längseinsteller für einen Fahrzeugsitz**
Longitudinal adjuster for a vehicle seat
Dispositif de réglage longitudinal pour un siège de véhicule

(30) Priorität: 05.09.2003 DE 10341000
(43) Veröffentlichungstag der Anmeldung: 09.03.2005
(73) Patentinhaber: KEIPER GmbH & Co. KG, 67657 Kaiserslautern (DE)
(72) Erfinder: Scheidler, Jochen, 42853 Remscheid (DE); Schüler, Rolf, 42579 Heiligenhaus (DE)
(74) Vertreter: Patentanwälte Hosenthien-Held und Dr. Held

(56) Entgegenhaltungen:
- WO-A-02/094605
- WO-A-03/062012
- DE-C1- 19 616 050
- US-A- 5 927 809

## Beschreibung

Die Erfindung betrifft einen Längseinsteller mit den Merkmalen des Oberbegriffs des Anspruches 1.

In der WO 02 / 094605 A1 ist ein Längseinsteller beschrieben, bei dem die Memoryvorrichtung einen Betätigungsmechanismus aufweist, welcher bei der Rückkehr von der freigeschwenkten Stellung in die gespeicherte Sitzlängsposition deren Erreichen mittels eines Hebels abfragt und dann die vorgeschwenkte Lehne entriegelt.

Aus der WO 03/062012 A1 ist ein Längseinsteller bekannt, bei dem bei Erreichen der eingestellten Sitzlängsposition der Positionierhebel in die zweite Sitzschiene einfällt und damit die Bewegung der ersten Sitzschiene sperrt, so dass die Verriegelungsvorrichtung den Längseinsteller verriegeln kann.

Die US 2002/0145418 A1 zeigt einen Längseinsteller mit einer Abfragevorrichtung, welche an der sitzstrukturfesten ersten Sitzschiene einen felderzeugenden Magneten und einen Hallsensor aufweist, wobei die fahrzeugstrukturfeste zweite Sitzschiene durch ihre Relativposition zur Abfragevorrichtung das magnetische Feld beinflusst.

Der Erfindung liegt die Aufgabe zu Grunde, einen Längseinsteller der eingangs genannten Art zu verbessern. Diese Aufgabe wird erfindungsgemäß durch einen Längseinsteller mit den Merkmalen des Anspruches 1 gelöst. Vorteilhafte Ausgestaltungen sind Gegenstand der Unteransprüche.

Die Abfrageeinrichtung ist erfindungsgemäß elektrisch realisiert und weist einen Magneten und einen Hallsensor auf, da diese bei kleinem Bauraumbedarf große Toleranzen erlauben und unempfindlich gegen äußere Einflüsse, wie Verunreinigungen, sind. Es wären aber auch Mikroschalter oder Lichtschranken denkbar. Mit der Abfrageeinrichtung, welche bei Erreichen der gespeicherten Sitzlängsposition anspricht, ist der Einsatz der Memoryvorrichtung nicht nur auf das Sperren der Sitzschienen beschränkt. So kann vorzugsweise das Ansprechen der Abfrageeinrichtung eine Zusatzfunktion auslösen, und zwar vorzugsweise außerhalb des Längseinstellers, d.h. insbesondere an einer anderen Stelle des mit dem erfindungsgemäßen Längseinsteller versehenen Fahrzeugsitzes, gegebenenfalls aber auch außerhalb davon.

Die Memoryvorrichtung weist vorzugsweise einen Steuer- und Messbereich und einen Lastbereich auf, so dass der Steuer- und Messbereich nicht hochbelastbar ausgebildet werden muss. Die Abfrageeinrichtung ist einem Positionierhebel des Lastbereichs zugeordnet, da dessen Position und Bewegung direkt mit dem Erreichen der eingestellten Sitzlängsposition verknüpft ist. Die Abfrageeinrichtung kann dann zudem als Zusatz der bekannten Memoryvorrichtung hinzugefügt werden. Der Magnet, der vorzugsweise ein Permanentmagnet ist, kann beispielsweise am Positionierhebel und der Hallsensor beispielsweise an einem Gehäuse der Memoryvorrichtung angebracht sein. Dies erleichtert die Verkabelung des Hallsensors.

Die Zusatzfunktion kann das Ansteuern einer fahrzeugsitzseitigen oder fahrzeugseitigen Sicherheits- und/oder Komforteinrichtung sein, beispielsweise das Entriegeln der Lehne, welche in der Sitzgebrauchsstellung verriegelt war, zum Freischwenken entriegelt und vorgeklappt und nach Erreichen der freigeschwenkten Stellung in letzterer erneut verriegelt wurde. Mit diesem Ansteuern des Entriegelns der Lehne wird sichergestellt, dass der Fahrzeugsitz erst wieder benutzt werden kann, wenn er sich wieder in der gespeicherten Sitzlängsposition befindet, da nur dann die Lehne freigegeben wird und wieder in ihre (nahezu aufrechte) Gebrauchsstellung geschwenkt werden kann. Demgegenüber kann mit einer Lehne, die bereits zu Beginn der Rückkehr von der freigeschwenkten Stellung in die Gebrauchsstellung entriegelt und zurückgeschwenkt wird, bei einem motorisch längseinstellbaren Fahrzeugsitz, wie er in der DE 195 41 221 C2 offenbart ist, der Längseinsteller eingeschaltet werden.

Die elektrische Entriegelung der Lehne, d.h. eine Entriegelung der Lehne unter Verwendung von elektromechanischen und/oder elektronischen Bauelementen hat gegenüber einer rein mechanischen Entriegelung den Vorteil, daß die Verbindung zwischen Memoryvorrichtung und Lehne mit Kabeln sehr viel einfacher ist als mit Bowdenzügen und auch mehrstufige Lösungen und Entkopplungen sehr viel leichter realisiert werden können. Eine rein mechanische Abfrage und Entriegelung der Lehne ist beispielsweise in der DE 195 09 344 C2 offenbart, wobei dort allerdings die Abfrageeinrichtung direkt an der Schienenverriegelungsvorrichtung angeordnet ist.

Die elektrische Entriegelung der Lehne erfolgt vorzugsweise mittels eines (elektromechanischen) Lehnenentriegelungsantriebs, welcher auf einen verriegelbaren Beschlag einwirkt, mittels welchem die Lehne am Sitzteil angelenkt ist. Zur Steigerung der Funktionssicherheit unter allen Bedingungen (z.B. Stromausfall) kann parallel zum elektrischen (genauer gesagt elektromechanischen) Lehnenentriegelungsantrieb eine manuelle, rein mechanische Entriegelung des Beschlags vorgesehen sein. Der Lehnenentriegelungsantrieb kann beispielsweise einen Getriebemotor aufweisen, welcher beispielsweise - angetrieben von einem Elektromotor mit Getriebestufe-mittels einer Spindel und einer Spindelmutter oder eines Seils und einer Trommel eine (lineare) Entriegelungsbewegung eines Ankers oder dergleichen für eine letztendlich mechanische Entriegelung des Beschlags erzeugt. Ebenso ist es möglich, daß der Lehnenentriegelungsantrieb als eine Art Linearmotor aufgebaut ist, beispielsweise einen Anker und eine mit diesem zusammenwirkende Tauchspule aufweist. Auch hier kann mit einer linearen Bewegung des Ankers, der vorzugsweise in Wirkverbindung mit einem Entriegelungsbolzen des Beschlags steht, beispielsweise mittels eines Seilzuges, eine Entriegelungsbewegung für eine letztendlich mechanische Entriegelung des Beschlags erzeugt werden. Der Elektromotor bzw. die Tauchspule des Lehnenentriegelungsantriebs ist zum Erregen vorzugsweise an eine Energieversorgung anschließbar, wobei zum Übergang des Lehnenentriegelungsantriebs in einem nicht-erregten Zustand die Energieversorgung wieder vom Elektromotor bzw. von der Tauchspule abgetrennt und diese(r) vorzugsweise kurzgeschlossen wird. Letzteres dient der Geräuschoptimierung, da dann das Magnetfeld im Elektromotor bzw. der Tauchspule die Rückkehrbewegung des Ankers in die Ausgangsstellung und einen eventuellen Kontakt mit einem Anschlag dämpft.

Die Erfindung wird vorzugsweise für Fahrzeugsitze von zweitürigen Kraftfahrzeugen eingesetzt, kann aber auch bei anderen Fahrzeugsitzen verwendet werden.

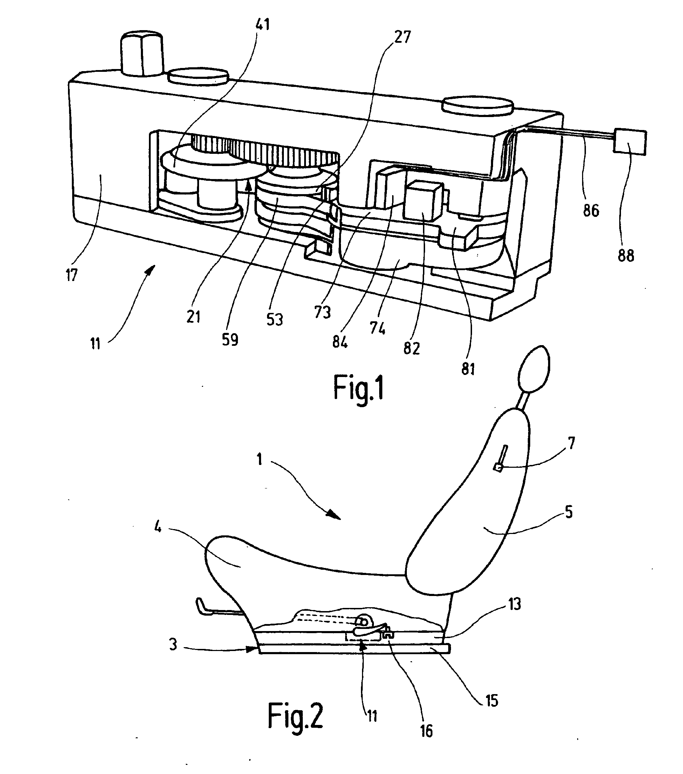

Im folgenden ist die Erfindung anhand eines in der Zeichnung dargestellten Ausführungsbeispiels näher erläutert. Es zeigen
- Fig. 1: eine perspektivische Ansicht einer Memoryvorrichtung des Ausführungsbeispiels mit schematisierter Auswerteelektronik,
- Fig. 2: eine teilweise aufgeschnittene und schematisierte Darstellung eines Fahrzeugsitzes,

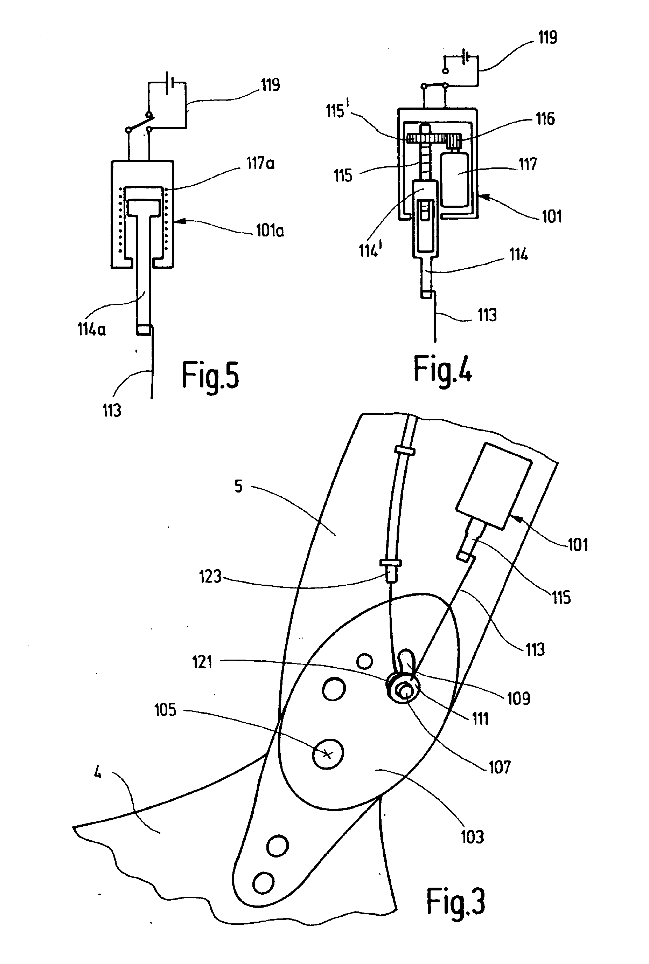

- Fig. 3: eine schematisierte Ansicht des Fahrzeugsitzes im Bereich eines Beschlags,
- Fig. 4: eine schematisierte Darstellung eines Lehnenentriegelungsantriebs im nicht-erregten Zustand, und
- Fig. 5: eine schematisierte Darstellung eines abgewandelten Lehnenentriegelungsantriebs im erregten Zustand.

Ein Fahrzeugsitz 1 für ein zweitüriges Kraftfahrzeug ist mittels eines Längseinstellers 3 als Ganzes längsverschiebbar, kann also verschiedene Sitzlängspositionen einnehmen. Die am Sitzteil 4 neigungseinstellbar angebrachte Lehne 5 des Fahrzeugsitzes 1 ist - beispielsweise nach Betätigen eines Entriegelungshebels 7 - freischwenkbar, d.h. von einer Gebrauchsstellung aus nach vorne klappbar, um den Zugang zu den Fondsitzen zu ermöglichen. Um einen möglichst breiten Zugang zu erhalten, wird beim oder nach dem Freischwenken der Lehne 5 der Längseinsteller 3 entriegelt, so daß der Fahrzeugsitz 1 nach vorne geschoben werden kann. Zur Rückkehr in die Gebrauchsstellung wird der Fahrzeugsitz 1 wieder in die zuvor eingenommene Sitzlängsposition verschoben und die Lehne 5 zugleich oder danach zurückgeschwenkt, worauf der Fahrzeugsitz 1 wieder verriegelt wird. Für die Speicherung dieser zuvor eingenommenen Sitzlängsposition ist eine Memoryvorrichtung 11 vorgesehen, wie sie in der WO 03 / 062012 A1 beschrieben ist, auf deren Offenbarungsgehalt ausdrücklich Bezug genommen wird.

Die Memoryvorrichtung 11 ist innerhalb eines inneren Bauraumes einer ersten Sitzschiene 13 des Längseinstellers 3 auf einer Fahrzeugsitzseite angeordnet, wobei die sitzstrukturfeste erste Sitzschiene 13 in Längsrichtung des Fahrzeugsitzes 1 relativ zu einer fahrzeugstrukturfesten zweiten Sitzschiene 15 des Längseinstellers 3 verschiebbar und mittels einer Verriegelungsvorrichtung 16 verriegelbar ist. Auf der anderen Fahrzeugsitzseite ist ein entsprechendes Paar von erster Sitzschiene 13 und zweiter Sitzschiene 15 vorgesehen, allerdings ohne Memoryvorrichtung 11.

Wie in der WO 03 / 062012 A1 im Detail beschrieben ist, weist die Memoryvorrichtung 11 ein Gehäuse 17 auf, innerhalb dessen ein Wegmesser 21 mit einem Lagerblock 27, einer daran anschließenden Spindel und einem in Getriebeverbindung mit dem Lagerblock 27 stehenden Laufrad 41 gelagert ist. Auf die Spindel ist ein als Spindelmutter ausgebildeter Steuersignalgeber 53 aufgeschraubt. Eine aus Federblech ausgestanzte Steuerfeder 59 mit Steuerzungen sitzt drehfest auf dem Steuersignalgeber 53. Auf einem gehäusefesten Lagerbolzen ist ein Positionierhebel 73 schwenkbar gelagert. Der für eine abgewandelte Ausführungsform vorgesehene Bauraum für zwei weitere Positionierhebel wird durch einen Platzhalter 74 aus Kunststoff eingenommen. Mittels eines nicht näher dargestellten Steuerfingers liegt der Positionierhebel 73 an einer Steuerzunge der Steuerfeder 59 an. An dem gegenüberliegenden, nach hinten weisenden Ende weist der Positionierhebel 73 eine Sperrnase 81 auf, welche zu der geöffneten Seitenwand der Memoryvorrichtung 11 nach außen hin weist. Die abgestützte Steuerfeder 59 spannt den Positionierhebel 73 nach innen vor, so daß die Sperrnase 81 normalerweise im Inneren des Gehäuses 17 angeordnet ist.

Auf dem Positionierhebel 73 ist ein Magnet 82 angebracht, der als Permanentmagnet ausgebildet ist und bezüglich der Schwenkrichtung des Positionierhebels 73 in axialer Richtung seitlich absteht. Am Gehäuse 17 ist in räumlicher Nähe zum Magnet 82, genauer gesagt an einer zur Aufnahme des Lagerbolzens des Positionierhebels 73 bestimmten Materialpartie, ein Hallsensor 84 angebracht, von dem aus Leitungen 86 zu einer Auswerteelektronik 88 geführt sind. Der Wegmesser 21 und die jeweils zugeordneten Bauteile bilden einen Steuer- und Meßbereich der Memoryvorrichtung 11, während der Positionierhebel 73 mit seinem Lager einen Lastbereich bildet. Der Magnet 82 und der Hallsensor 84 bilden eine Abfrageeinrichtung.

In der Sitzgebrauchsstellung des Fahrzeugsitzes 1 ist der Längseinsteller 3 verriegelt. Innerhalb der Memoryvorrichtung 11 befindet sich der Steuersignalgeber 53 am oberen Ende der Spindel und liegt am Lagerblock 27 des Wegmessers 21 an, während das Laufrad 41 sich durch eine Öffnung der ersten Sitzschiene 13 hindurch in Anlage an der zweiten Sitzschiene 15 befindet. Diese eingestellte Sitzlängsposition ist im folgenden als Memoposition bezeichnet.

Beim oder nach dem Freischwenken der Lehne 5 wird der Längseinsteller 3 entriegelt. Auf beiden Seiten des Fahrzeugsitzes 1 kann nun die erste Sitzsschiene 13 relativ zur zweiten Sitzschiene 15 in Sitzlängsrichtung nach vorne verschoben werden. Aufgrund der Relativverschiebung zwischen erster Sitzschiene 13 und zweiter Sitzschiene 15 läuft das Laufrad 41 aufgrund von Reibung an der zweiten Sitzschiene 15 entlang, so daß der Wegmesser 21 angetrieben wird. Der Steuersignalgeber 53 bewegt sich dabei entlang der Spindel nach unten. Der zurückgelegte Weg des Fahrzeugsitzes 1 steht in direktem Zusammenhang mit dem Weg des Steuersignalgebers 53 entlang der Spindel als einem Teil des Wegmessers 21.

Beim Zurückschieben des Fahrzeugsitzes 1 bewegt sich der Steuersignalgeber 53 wieder auf den Lagerblock 27 zu. Sobald der Steuersignalgeber 53 in Anlage an den Lagerblock 27 gelangt, entsteht ein Steuermoment, welches versucht, den Steuersignalgeber 53 weiter zu drehen. Dabei wird die Steuerfeder 59 beaufschlagt, welche mit ihrer Steuerzunge auf den Steuerfinger des Positionierhebels 73 drückt. Der Positionierhebel 73 schwenkt dadurch nach außen, wobei die Sperrnase 81 in eine Zahnlücke der zweiten Sitzschiene 15 gelangt, so daß durch diese Sperre die Relativbewegung der ersten Sitzschiene 13 bezüglich der zweiten Sitzschiene 15 gestoppt wird. Der Fahrzeugsitz 1 hat damit wieder seine Memoposition erreicht.

Die Schwenkbewegung des Positionierhebels 73 mit dem Magnet 82 bewirkt eine Änderung des magnetischen Feldes, auf die der Hallsensor 84 anspricht und die von der Auswerteelektronik 88 als Erreichen der Memoposition erkannt und ausgewertet wird und eine oder mehrere Zusatzfunktionen auslöst. Eine solche Zusatzfunktion kann das Ansteuern einer fahrzeugsitzseitigen oder fahrzeugseitigen Sicherheits-(z.B. Airbag, Gurtstraffer) und/oder Komforteinrichtung (z.B. Lehnenentriegelung, Sitzhöheneinsteller) sein. Im Ausführungsbeispiel, bei dem die Lehne 5 in der freigeschwenkten Stellung verriegelt wird, wird, wenn die Abfrageeinrichtung das Erreichen der Memoposition meldet, mittels eines elektrischen Lehnenentriegelungsantriebs 101 die elektrische Entriegelung der mechanisch verriegelten Lehne 5 ausgelöst, d.h. eine Lehnenverriegelung geöffnet, so daß die Lehne 5 anschließend wieder in ihre Gebrauchsstellung geschwenkt werden kann, wie nachfolgend ausgeführt.

Die Lehne 5 ist am Sitzteil 4 mittels zweier Beschläge 103 angebracht und schwenkt beim Freischwenken um eine Lehnenschwenkachse 105. Die Beschläge 103 weisen die für das Freischwenken entriegelbare Lehnenverriegelung auf, wobei das Verriegeln der Lehne 5 in der freigeschwenkten Stellung mittels der Lehnenverriegelung eines der beiden Beschläge 103 erfolgt. Dieser letztgenannte Beschlag 103 weist einen Entriegelungsbolzen 107 auf, der in einer Kulisse 109 schwenkbar ist, welche in einer Ebene senkrecht zur Lehnenschwenkachse 105 verläuft. Am Entriegelungsbolzen 107 ist ein Befestigungsring 111 eingehängt, von dem aus ein Seilzug 113 straff zu einem in seiner Längsrichtung beweglichen Anker 114 des Lehnenentriegelungsantriebs 101 geführt und dort befestigt ist, so daß der Anker 114 in Wirkverbindung mit dem Entriegelungsbolzen 107 steht.

Als Lehenenentriegelungsantrieb 101 wird vorliegend ein Getriebemotor verwendet. An dem innerhalb eines Gehäuses des Lehnenentriegelungsantriebs 101 angeordneten Ende des Ankers 114 ist eine Spindelmutter 114' vorgesehen, vorliegend angeformt, welche auf einer im Gehäuse des Lehnenentriegelungsantriebs 101 gelagerten Spindel 115 läuft. Auf der Spindel 115 sitzt ein Zahnrad 115', welches vorliegend mit der Spindel 115 einstückig ausgebildet ist. Dieses angeformte Zahnrad 115' kämmt unter Bildung einer Getriebestufe mit einem Ritzel 116, welches fest auf der Abtriebswelle eines Elektromotors 117 sitzt. Der Elektromotor 117 ist von einer Energieversorgung 119 bestrombar. Im stromlosen, nicht-erregten Zustand ist der Anker 114 aufgrund einer Federbelastung ausgefahren. Eine abgewandelten Ausführung des Lehnenentriegelungsantriebs 101 unterscheidet sich äußerlich kaum von diesem, weshalb gleiche und gleichwirkende Bauteile um einen Buchstaben "a" ergänzte Bezugszeichen tragen. Dieser Lehnenentriegelungsantrieb 101a weist anstelle eines Elektromotors 117 eine von der Energieversorgung 119 bestrombare Tauchspule 117a auf, welche bei Erregung den leicht modifizierten Anker 114a einzieht, d.h. der Lehnenentriegelungsantrieb 101a ist als ein sehr einfacher Linearmotor ausgebildet.

Wenn der Lehnenentriegelungsantrieb 101 von der Auswerteelektronik 88 direkt oder indirekt ein Signal zum Erregen erhält, wird die Energieversorgung 119 eingeschaltet und der Elektromotor 117 (bzw. die Tauchspule 117a) bestromt, worauf dieser den Anker 114 (bzw. 114a) einzieht, welcher mittels des Seilzuges 113 den Entriegelungsbolzen 107 bewegt. Dadurch wird die Lehnenverriegelung des Beschlags 103 entriegelt, und die Lehne 5 kann um die Lehnenschwenkachse 105 zurückgeschwenkt werden. Mit dem Übergang in den erregten Zustand des Lehnenentriegelungsantriebs 101 wird ein Zeitglied aktiviert, welches nach einer vorbestimmten Zeit die Energieversorgung 119 abschaltet und den Elektromotor 117 (bzw. die Tauchspule 117a) kurzschließt, d.h. die Lehnenentriegelung 101 in einen nicht-erregten Zustand bringt. Eine innerhalb des Beschlags 103 vorgesehene Vorspannung zieht den Entriegelungsbolzen 107 in seine Ausgangsstellung, wodurch dieser mittels des Seilzuges 113 den Anker 114 ausfährt (bzw. den Anker 114a aus der Tauchspule 117 zieht). Durch den Kurzschluß wird die Energie des Magnetfelds im Elektromotor 117 (bzw. in der Tauchspule 117a) zum Dämpfen der Bewegung des Ankers 114 (bzw. 114a) verwendet. Auch wenn die Lehne 5 zu diesem Zeitpunkt noch nicht in ihre Gebrauchsstellung geschwenkt worden sein sollte, wird sie auf diese Weise automatisch wieder in der freigeschwenkten Stellung gesichert.

Wenn die in die Gebrauchsstellung zurückgeschwenkte Lehne 5 wieder verriegelt ist, wird die Verriegelungsvorrichtung 16 freigegeben, die daraufhin wieder den Längseinsteller 3 verriegelt, so daß der Fahrzeugsitz 1 wieder für den Sitzgebrauch zur Verfügung steht. Der Positionierhebel 73 schwenkt dann in der Regel in seine Ausgangsposition zurück.

Vorzugsweise ist am Entriegelungsbolzen 107 mittels eines weiteren Befestigungsrings 121 ein Bowdenzug 123 angebracht, mittels welchem eine manuelle, rein mechanische Betätigung der Lehnentriegelung des Beschlags 103 möglich ist, vorzugsweise mittels des beispielsweise seitlich an der Lehne 5 angebrachten Entriegelungshebels 7.

### Bezugszeichenliste

- 1: Fahrzeugsitz
- 3: Längseinsteller
- 4: Sitzteil
- 5: Lehne
- 7: Entriegelungshebel
- 11: Memoryvorrichtung
- 13: erste Sitzschiene
- 15: zweite Sitzschiene
- 16: Verriegelungsvorrichtung
- 17: Gehäuse
- 21: Wegmesser
- 27: Lagerblock
- 41: Laufrad
- 53: Steuersignalgeber
- 59: Steuerfeder
- 73: Positionierhebel
- 74: Platzhalter
- 81: Sperrnase
- 82: Magnet
- 84: Hallsensor
- 86: Leitungen
- 88: Auswerteelektronik
- 101, 101a: Lehnenentriegelungsantrieb
- 103: Beschlag
- 105: Lehnenschwenkachse
- 107: Entriegelungsbolzen
- 109: Kulisse
- 111: Befestigungsring
- 113: Seilzug
- 114, 114a: Anker
- 114': Spindelmutter
- 115: Spindel
- 115': Zahnrad
- 116: Ritzel
- 117: Elektromotor
- 117a: Tauchspule
- 119: Energieversorgung
- 121: weiterer Befestigungsring
- 123: Bowdenzug

## Patentansprüche

1. Längseinsteller für einen Fahrzeugsitz (1) mit freischwenkbarer Lehne (5), mit einer ersten Sitzschiene (13), einer zweiten Sitzschiene (15), relativ zu welcher die erste Sitzschiene (13) in Längsrichtung verschiebbar ist, und einer der ersten Sitzschiene (13) zugeordneten und mit der zweiten Sitzschiene (15) zusammenwirkenden Memoryvorrichtung (11), welche eine eingestellte Sitzlängsposition speichert, die durch eine beim Freischwenken der Lehne (5) vorgenommene Längsverschiebung des Fahrzeugsitzes (1) verlassen und beim Zurückschwenken der Lehne (5) wieder eingenommen wird, wobei die Memoryvorrichtung (11) eine Abfrageeinrichtung (82, 84) aufweist, welche bei Erreichen der gespeicherten Sitzlängsposition anspricht, **dadurch gekennzeichnet, dass** ein mit der zweiten Sitzschiene (15) in Wirkverbindung bringbarer Wegmesser (21) und ein relativ zu dem Wegmesser (21) beweglicher Steuersignalgeber (53) vorgesehen sind, dessen Relativbewegung zum Wegmesser (21) aus einer Ausgangsposition heraus die vorgenommene Längsverschiebung wiedergibt und der Steuersignalgeber (53) spätestens bei Erreichen der gespeicherten Sitzlängsposition ein Steuermoment erfährt und dann wenigstens einen mit der zweiten Sitzschiene (15) zusammenwirkenden Positionierhebel (73) ansteuert, und dass die Abfrageeinrichtung (82, 84) dem Positionierhebel (73) zugeordnet ist und einen Magneten (82) und einen Hallsensor (84) aufweist.

2. Längseinsteller nach Anspruch 1, **dadurch gekennzeichnet, dass** der Magnet (82) am Positionierhebel (73) und der Hallsensor (84) an einem Gehäuse (17) der Memoryvorrichtung (11) angebracht ist.

3. Längseinsteller nach Anspruch 1 oder 2, **dadurch gekennzeichnet, dass** das Ansprechen der Abfrageeinrichtung (82, 84) eine Zusatzfunktion auslöst.

4. Längseinsteller nach Anspruch 3, **dadurch gekennzeichnet, dass** als Zusatzfunktion das Ansteuern einer fahrzeugsitzseitigen oder fahrzeugseitigen Sicherheits- und/oder Komforteinrichtung vorgesehen ist.

5. Längseinsteller nach Anspruch 4, **dadurch gekennzeichnet, dass** das Ansteuern elektrisch erfolgt.

6. Längseinsteller nach Anspruch 4 oder 5, **dadurch gekennzeichnet, dass** als Zusatzfunktion das Entriegeln der in der freigeschwenkten Stellung verriegelten Lehne (5) vorgesehen ist.

7. Fahrzeugsitz (1), insbesondere für ein zweitüriges Kraftfahrzeug, mit einer freischwenkbaren Lehne (5), **gekennzeichnet durch** einen Längseinsteller (3) nach einem der Ansprüche 1 bis 6.

## Claims

1. A longitudinal adjuster for a a vehicle seat with a freely pivotable backrest (5), with a first seat rail (13), a second seat rail (15), relative to which the first seat rail (13) can carry out a sliding movement in longitudinal direction, and with a memory device (11) which is assigned to the first seat rail (13) and interacting with the second seat rail (15), and which memorizes an adjusted longitudinal seat position which, due to the longitudinal displacement of the vehicle seat (1) that occurs when freely pivoting the backrest (5), has been left and is taken again when pivoting the backrest (5) back again, wherein the memory device (11) comprises an interrogation device (82, 84), which responds when the memorized longitudinal seat position is reached, **characterized in that** a displacement measuring device (21), which can be operatively connected to the second seat rail (15), and a control signal generator (53), which is movable relative to the displacement measuring device (21), are provided, the relative movement of which with respect to the displacement measuring device (21) represents the longitudinal displacement which has been made with respect to an initial position, and that the control signal generator (53) gets a control moment when the memorized longitudinal seat position is reached, at the latest, and then controls at least one positioning lever (73) which interacts with the second seat rail (15), and that the interrogation device (82, 84) is assigned to the positioning lever (73) and comprises a magnet (82) and a Hall sensor (84).

2. Longitudinal adjuster according to Claim 1, **characterized in that** the magnet (82) is fitted to the positioning lever (73), and the Hall sensor (84) is fitted to a casing (17) of the memory device (11).

3. Longitudinal adjuster according to Claim 1 or 2, **characterized in that** the activation of the interrogation device (82, 84) triggers an additional function.

4. Longitudinal adjuster according to Claim 3, **characterized in that,** as an additional function, controlling of a safety and/or comfort device on the vehicle-seat side or vehicle side is provided.

5. Longitudinal adjuster according to Claim 4, **characterized in that** control is performed electrically.

6. Longitudinal adjuster according to Claim 4 or 5, **characterized in that** unlocking of the backrest (5), which is locked in the freely pivoted position, is provided as additional function.

7. Vehicle seat (1), particularly for a two-door motor vehicle, with a freely pivotable backrest (5), **characterized by** a longitudinal adjuster (3) according to any of Claims 1 to 6.

## Revendications

1. Dispositif de réglage longitudinal pour un siège de véhicule (1) à dossier rabattable (5), avec un premier rail de siège (13), avec un deuxième rail de siège (15) par rapport auquel le premier rail de siège (13) est déplaçable dans la direction longitudinale et avec un dispositif de mémoire (11), associé au premier rail de siège (13) et coopérant avec le deuxième rail de siège (15), qui mémorise une position longitudinale du siège qui a été réglée, qui est abandonnée par un déplacement longitudinal du siège de véhicule (1) réalisé lors du rabattage du dossier (5) et qui est rétablie lors du retour du dossier (5), le dispositif de mémoire (11) possédant un dispositif d'interrogation (82, 84) qui répond lorsqu'est atteinte la position longitudinale du siège qui a été mémorisée, **caractérisé par le fait qu'**il est prévu un capteur de déplacement (21) pouvant être amené à coopérer avec le deuxième rail de siège (15) et un transducteur de signal de commande (53) mobile par rapport au capteur de déplacement (21), dont le mouvement relatif par rapport au capteur de déplacement (21), à partir d'une position de départ, représente le déplacement longitudinal effectué, **par le fait que** le transducteur de signal de commande (53) subit un couple de commande au plus tard lorsqu'est atteinte la position longitudinale du siège qui a été mémorisée et commande alors au moins un levier de positionnement (73) coopérant avec le deuxième rail de siège (15), et **par le fait que** le dispositif d'interrogation (82, 84) est associé au levier de positionnement (73) et comprend un aimant (82) et un capteur à effet Hall (84).

2. Dispositif de réglage longitudinal selon la revendication 1, **caractérisé par le fait que** l'aimant (82) est monté sur le levier de positionnement (73) et le capteur à effet Hall (84) sur un boîtier (17) du dispositif de mémoire (11).

3. Dispositif de réglage longitudinal selon l'une des revendications 1 ou 2, **caractérisé par le fait que** la réponse du dispositif d'interrogation (82, 84) déclenche une fonction supplémentaire.

4. Dispositif de réglage longitudinal selon la revendication 3, **caractérisé par le fait qu'**il est prévu comme fonction supplémentaire le déclenchement d'un équipement de sécurité et/ou de confort se situant au niveau du siège du véhicule ou du véhicule.

5. Dispositif de réglage longitudinal selon la revendication 4, **caractérisé par le fait que** le déclenchement s'effectue électriquement.

6. Dispositif de réglage longitudinal selon l'une des revendications 4 ou 5, **caractérisé par le fait qu'**il est prévu comme fonction supplémentaire le déverrouillage du dossier (5) verrouillé dans la position rabattue.

7. Siège de véhicule (1), en particulier pour un véhicule automobile à deux portes, avec un dossier rabattable (5), **caractérisé par** un dispositif de réglage longitudinal (3) tel que défini à l'une des revendications 1 à 6.
